# EUROPÄISCHE PATENTSCHRIFT

(11) **EP 2 401 653 B1**
(45) Veröffentlichungstag und Bekanntmachung des Hinweises auf die Patenterteilung: **08.04.2020**
(21) Anmeldenummer: 10708883.3
(22) Anmeldetag: 18.02.2010
(51) Int. Cl.: G03B 21/28, G03B 21/62, H04N 5/74

(54) **BILDSCHIRM**
SCREEN
ÉCRAN

(30) Priorität: 24.02.2009 AT 3042009
(43) Veröffentlichungstag der Anmeldung: 04.01.2012
(73) Patentinhaber: Lechner, Thomas Franz, 1070 Wien (AT); Lechner, David Gabriel, 1070 Wien (AT); Lechner, Gregor Sebastian, 1070 Wien (AT)
(72) Erfinder: Lechner, Thomas Franz, 1070 Wien (AT); Lechner, David Gabriel, 1070 Wien (AT); Lechner, Gregor Sebastian, 1070 Wien (AT)
(74) Vertreter: Fox, Tobias
(86) Internationale Anmeldenummer: PCT/AT2010/000045
(87) Internationale Veröffentlichungsnummer: WO 2010/108198

(56) Entgegenhaltungen:
- DE-A1- 3 741 541
- GB-A- 2 417 570
- JP-A- 9 107 514
- US-A- 5 115 266
- US-A- 5 818 401
- US-A1- 2002 159 166
- US-A1- 2005 151 938
- US-B1- 6 449 103
- US-B1- 6 644 816

## Beschreibung

Die Erfindung betrifft eine Säule mit einem Bildschirm, welcher einen Wiedergabewinkel von 360° aufweist, umfassend einen im Strahlengang eines Projektionsmittels und im Bereich der Zentralachse einer um 360° geschlossenen, von der Säule gebildeten Projektionsfläche angeordneten ersten Spiegel, dessen Spiegelfläche die Fläche einer um die im Strahlengang des Projektionsmittels liegenden Achse rotierenden Kurve ist, wobei die Kurve und der Abstand des Projektionsmittels zum ersten Spiegel derart gewählt sind, dass der Bildschirm bei Projektion des ersten Spiegels im Winkel von 360° beleuchtet wird, wobei die derart geschlossene Projektionsfläche einen Innenraum, in welchem das Projektionsmittel und der erste Spiegel angeordnet sind, und einen Außenraum definiert, wobei ferner die Projektionsfläche als Rückprojektionsfolie ausgebildet ist, wodurch der Bildschirm vom Außenraum aus betrachtbar ist, und wobei das Projektionsmittel im Innenraum des ersten Spiegels angeordnet ist und das Licht von dem Projektionsmittel und durch eine Öffnung im ersten Spiegel ausgesendet wird.

Es ist bekannt, eine Zylinderoberfläche über den gesamten Umfang mit einer Matrix von LEDs zu versehen und diese elektronisch so anzusteuern, dass sich die einzelnen Leuchtpunkte bei ausreichender Betrachterdistanz zu ziffern- oder gestaltähnlichen Bildern ergänzen. Nachteil dieser Lösung ist, dass die Bildauflösung durch die Größe der LEDs begrenzt ist, dass nur ein begrenzter Farbumfang zur Verfügung steht und dass der gewünschte Anzeigeninhalt in ein eigenes elektronisches Format konvertiert werden muss.

Die US 5 818 401 offenbart einen Bildschirm, der aus in einer Trommel rotierenden LED-Reihen besteht. Die Höhe der Rotationsgeschwindigkeit sowie die LED-Steuerung sind so gewählt, dass für den Betrachter unter Ausnutzung der menschlichen Sehträgheit eine stehende zylindrische Bildschirmfläche mit dem gewünschten Anzeigeinhalt entsteht. Zu den genannten Nachteilen tritt bei dieser Lehre hinzu, dass eine rotierende Mechanik erforderlich ist, die zu erhöhtem Wartungs- und Reparaturaufwand führt. Ein weiterer Nachteil besteht darin, dass nur rotationssymmetrische Bildschirmflächen erzeugbar sind.

Die US 6333826 B1 offenbart einen Projektor für eine 360°-Kinoleinwand, bei welchem ein von einer punktförmigen Lichtquelle kommender Strahl über einen sphärischen Spiegel aufgefächert wird. Diese Lösung ist für Zuschauer, die innerhalb des Kinos sitzen, gedacht.

Die GB 2 417 570 A zeigt einen gekrümmten Bildschirm, bei welchem ebenfalls ein Strahl aus einer punktförmigen Lichtquelle außerhalb eines Kugelspiegels auf denselben fällt und aufgefächert wird. Der Bildschirm ist so konstruiert, dass er einfahrbar ist und an einer Zimmerdecke aufgehängt ist.

Die US 6644816 B1 gibt einen gekrümmten Bildschirm an, bei welchem ein Projektor aufrecht gestellt wird und auf einen konischen oder anderweitig gekrümmten Spiegel gerichtet ist, der den Lichtstrahl auffächert. Es entsteht ein voluminöser 360°-Bildschirm.

Die US 5115266 A lehrt eine Panoramakamera, die in einem Winkelbereich von 360° Licht über einen Kugelspiegel und einen planaren Spiegel einfängt. Das optische System kann auch in einer Umkehrung als hängender Projektor verwendet werden.

Die Erfindung zielt darauf ab, einen Bildschirm mit einem Wiedergabewinkel von 360° zu schaffen, welcher gegenüber dem Stand der Technik als Säule verwendbar und platzsparend aufgebaut ist. Ein weiteres Ziel besteht darin, einen Bildschirm zu schaffen, der leicht zu bauen ist, nicht nur auf rotationssymmetrische Bildschirmflächen beschränkt ist und elektronische Standardformate von Graphiken, Fotos oder Filmen wiedergeben kann.

Ein weiteres Ziel besteht darin, ein mit einem Bildschirm versehenes Werbemittel zu schaffen, auf dem Inhalte mulitmedial vorführbar sind.

Der erfindungsgemäße Bildschirm zeichnet sich dadurch aus, dass das durch die Öffnung im ersten Spiegel ausgesendete Licht auf einen zweiten planen Spiegel gesendet wird und dann über den ersten Spiegel auf die Projektionsfläche reflektiert wird.

In einer alternativen Ausführung zeichnet sich der Bildschirm dadurch aus, dass im Strahlengang eines Projektionsmittels und im Bereich der Zentralachse einer um 360° geschlossenen, von einer Säule gebildeten Projektionsfläche ein Spiegel angeordnet ist, dessen Spiegelfläche die Fläche einer um die im Strahlengang des Projektionsmittels liegenden Achse rotierenden Kurve ist, wobei die Kurve und der Abstand des Projektionsmittels zum Spiegel derart gewählt sind, dass der Bildschirm bei Projektion des Spiegels im Winkel von 360° beleuchtet wird.

Eine bevorzugte Ausführungsform des Bildschirmes zeichnet sich dadurch aus, dass der Kugelspiegel sphärisch, parabolisch oder hyperbolisch ist. Er kann auch elliptisch ausgebildet sein.

Eine weitere bevorzugte Ausführungsform besteht darin, dass zwischen Projektionsmittel und Spiegel im Strahlengang ein Blendenelement angeordnet ist.

Bei einer weiteren bevorzugten Ausführungsform ist das Blendenelement als Kabelkanal ausgebildet.

Eine weitere bevorzugte Ausführungsform besteht darin, dass das Projektionsmittel mindestens ein Beamer ist.

Eine zusätzliche Ausführungsform weist das Merkmal auf, dass die Säule und die Projektionsfläche im wesentlichen zylindrisch oder ellipsoid ausgebildet sind.

Eine bevorzugte Ausführungsform des Bildschirmes zeichnet sich dadurch aus, dass die Projektionsfläche eine Rückprojektionsfolie ist, die z.B. aus Polyvinylchlorid besteht.

Eine andere bevorzugte Ausführungsform der Erfindung zeichnet sich dadurch aus, dass das Projektionsmittel mit einem Computer ansteuerbar ist, wobei auf dem Computer ein Programm zur Bearbeitung der Bilddaten installiert ist, durch welches die durch die Spiegelkrümmung verzerrte Darstellung entzerrbar ist.

Gegenstand der Erfindung ist auch eine Reklamesäule mit einem Bildschirm der vorstehend geschilderten Ausbildung.

Eine bevorzugte Ausführungsform der Säule besteht darin, dass das Projektionsmittel zwei Beamer umfasst und im Bereich von dem Projektionsmittel aus betrachtet hinter dem Spiegel Lautsprecherboxen zur Audiowiedergabe angeordnet sind, wobei in der Zentralachse der Säule und in dem Blendenelement Kabel zur Ansteuerung der Lautsprecherboxen geführt sind.

Eine weitere bevorzugte Ausführungsform der Säule besteht darin, dass sie einen zweiten Bildschirm aufweist, wobei das zugeordnete Projektionsmittel und der zugeordnete Spiegel des zweiten Bildschirmes entgegengesetzt zu jenen des ersten Bildschirmes angeordnet sind. Eine bevorzugte Ausführungsform besteht darin, dass die Projektionsfläche im wesentlichen kugelförmig oder kegelförmig ist.

Die Erfindung wird nachstehend anhand eines in den Zeichnungen dargestellten Ausführungsbeispieles näher erläutert. Es zeigen: Fig. 1 einen Schnitt durch einen in einer Säule eingebauten Bildschirm aus dem Stand der Technik, die Fig. 2 und Fig. 3 jeweils den Schnitt durch zwei in einer Säule eingebaute Bildschirme, die Fig. 4 bis Fig. 15 jeweils den Schnitt. durch einen in einer Säule eingebauten Bildschirm, wobei Fig. 5, 7, 10, 11, 12 und 13 Lösungen aus dem Stand der Technik zeigen.

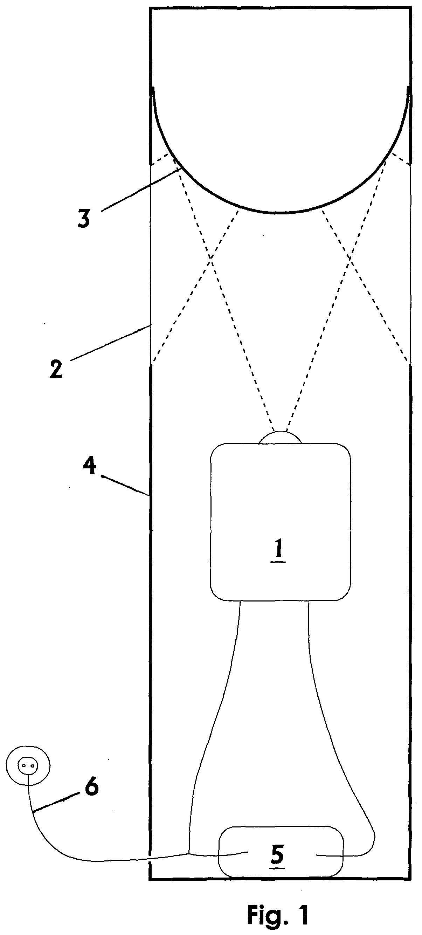

Gemäß Fig. 1 wird wie in der GB 2 417 570 A aus dem Stand der Technik gegenüber einem Projektionsmittel 1 ein erster Spiegel 3 angeordnet, der Licht auf eine Projektionsfläche 2 reflektiert, die einen Abschnitt einer zylindrischen Säule 4 bildet, welche das Projektionsmittel, den Spiegel und eine Ansteuereinrichtung 5 für das Projektionsmittel aufnimmt. Vorzugsweise liegt die Rotationsachse des Spiegels nahe oder in der zentralen optischen Achse, die durch das Projektionsmittel 1 vorgegeben ist. Vorzugweise liegt auch die Rotationsachse der zweidimensionalen, sich um 360° erstreckenden Projektionsfläche 2 nahe oder in der zentralen optischen Achse, die durch das Projektionsmittel 1 vorgegeben ist. Das Projektionsmittel 1 kann ein handelsüblicher Beamer sein, der durch einen die Ansteuereinrichtung bildenden Computer 5 angesteuert wird. Als Ansteuereinrichtung kann auch ein handelsübliches Wiedergabegerät, z.B. ein Blue Ray Player, DVD-Player etc., verwendet werden. Das Projektionsmittel kann weiters aus zwei oder mehr Beamern bestehen, die verschiedene Inhalte darstellen oder einen gemeinsamen Inhalt in höherer Auflösung oder höherer Helligkeit.

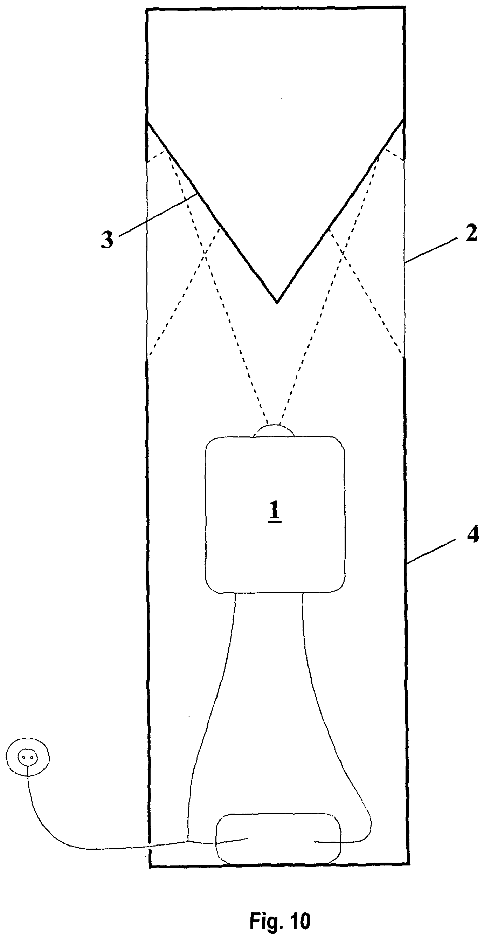

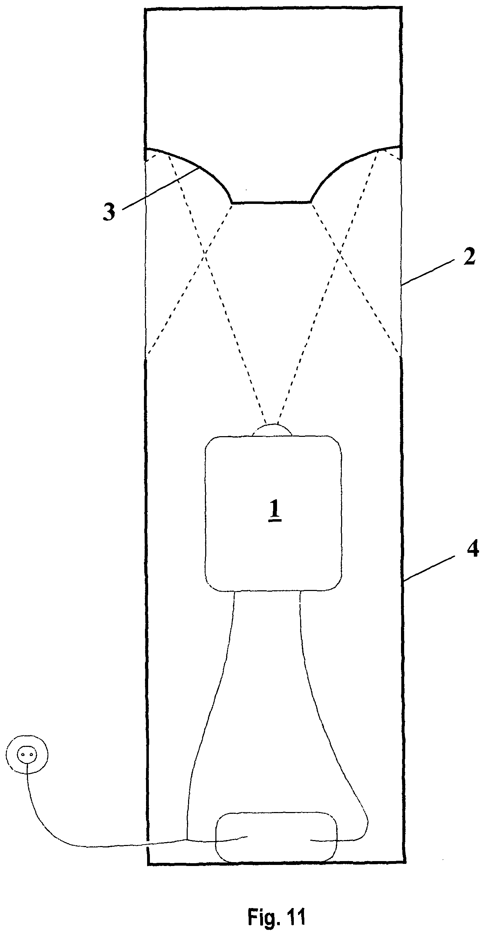

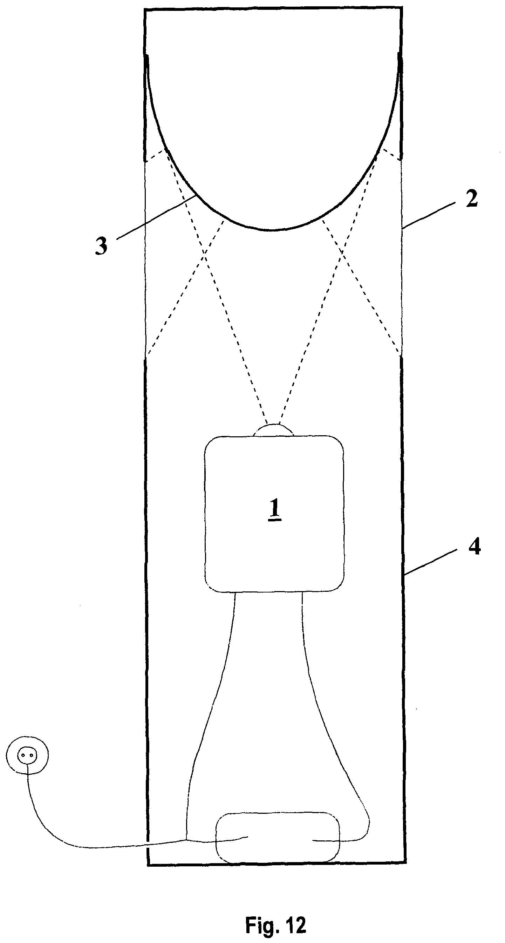

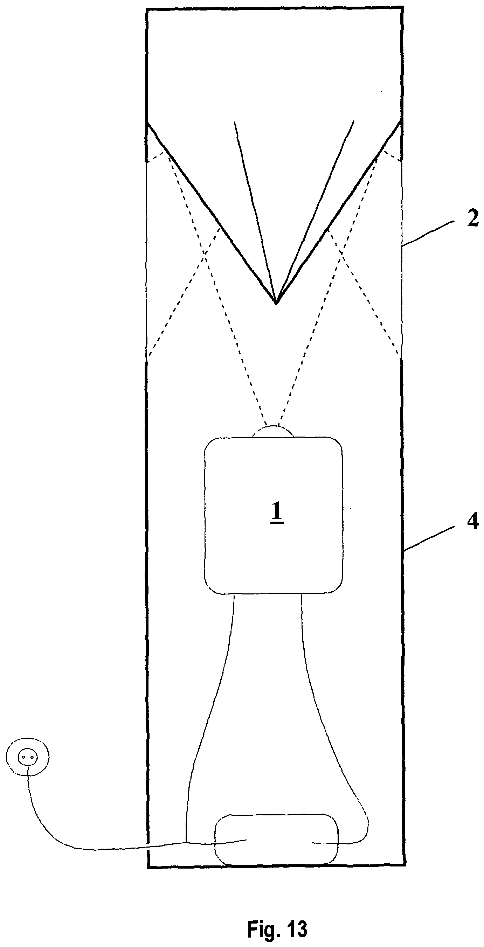

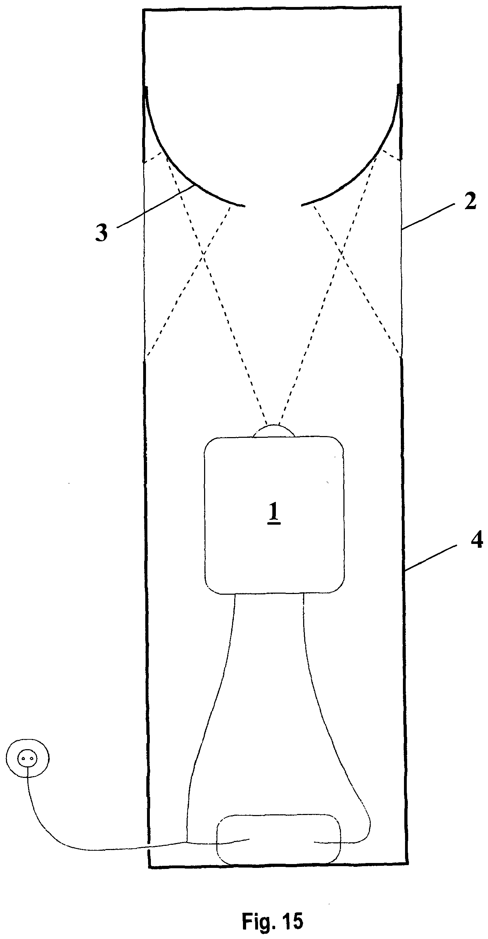

Der erste Spiegel 3 kann sphärisch (Kugelspiegel), parabolisch, hyperbolisch oder anderweitig in zwei Raumdimensionen gekrümmt ausgeführt sein. Er kann beispielsweise auch elliptisch sein oder die Form eines Kegels aufweisen (siehe Fig. 10, 11, 12). Dies hängt einerseits von den gewünschten Maßen der Höhe der Projektionsfläche 2 und Entfernung des ersten Spiegels 3 von dem Projektionsmittel 1 ab, anderseits von der Form der Projektionsfläche 2 und der gewünschten verzerrten oder entzerrten Darstellung. Der erste Spiegel 3 kann als Halbkugel oder Kugelausschnitt ausgebildet sein. Aus Fig. 1 und den angedeuteten Strahlengängen geht zudem hervor, dass der dem Projektionsmittel 1 zugewandte Zenit des Spiegels 3 für die Bildschirmdarstellung ungenutzt ist und als Loch oder lichtdurchlässig ausgebildet sein kann (siehe Fig. 15). Dies hat den Vorteil, dass kein Licht von dieser Stelle des Spiegels in den Innenraum der Säule 4 zurückgeworfen wird und dort störende Streulichteffekte bewirkt. Zudem hat ein geöffneter und somit als Ringfläche ausgebildeter Spiegel den Vorteil, leichter herstellbar und somit wirtschaftlicher in der Anschaffung zu sein. Alternativ kann der erste Spiegel gemäß Fig. 13 pyramidisch ausgebildet sein. In diesem Fall weist der Spiegel plane Flächenelemente auf, die an ihrem Stoß Kanten ausbilden. Bei der digitalen Projektion sind daraus resultierende optische Verzerrungseffekte und Projektionslücken bzw. Überlappungen zu berücksichtigen, insbesondere bei der Verzerrung der zu projizierenden Inhalte, die durch die Reflektion am Spiegel 3 entzerrt wird.

Die Projektionsfläche 2 ist eine Rückprojektionsfolie. Handelsübliche Rückprojektionsfolien bestehen z.B. aus Polyvinylchlorid (PVC).

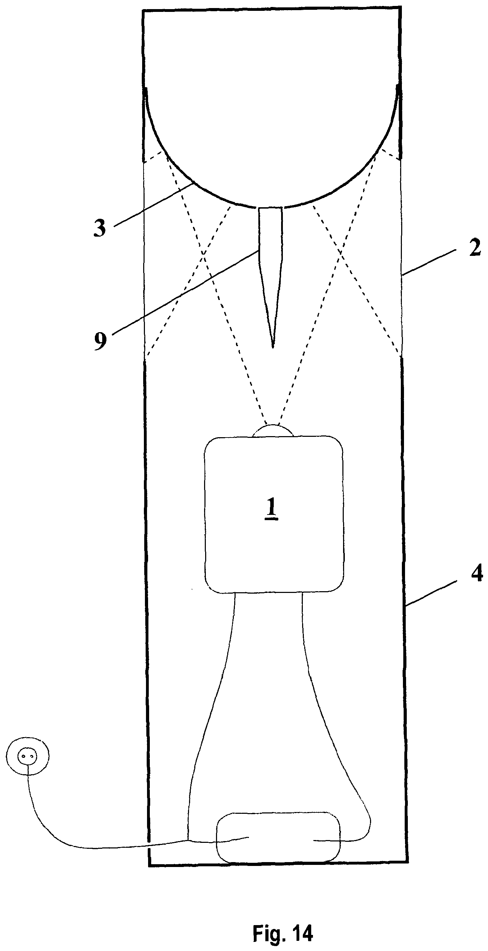

Gemäß Fig. 14 ist im Bereich des Zenits des ersten Spiegels 3 ein Blendenelement 9 angeordnet. Das Blendenelement 9 kann die Form eines Zylinders aufweisen. Obwohl der Querschnitt des Blendenelementes 9 im Vergleich mit dem Querschnitt der Projektionsfläche 2 klein ist, tritt der überraschende Effekt ein, dass von der Innenseite der Projektionsfläche 2 zurückgestreutes Licht von der gegenüberliegenden inneren Seite der Projektionsfläche 2 abgeschirmt ist. Dadurch wird störendes Streulicht innerhalb der Säule 4 wirksam vermindert.

Der Bildschirm ist in Fig. 1 innerhalb einer Säule 4, insbesondere einer Reklamesäule angeordnet, die über einen Anschluss 6 an eine externe Spannungsquelle verfügt. Die Säule kann Lautsprecherboxen zur Audiowiedergabe aufweisen. Die Lautsprecherboxen sind vorzugsweise im oberen Teil einer aufgestellten Säule 4 angeordnet, weil dies dem natürlichen Hörempfinden der Betrachter des Bildschirmes am nächsten kommt. Es versteht sich, dass die äußere Oberfläche der Säule 4 an den entsprechenden Stellen schalldurchlässig ausgebildet ist.

Darstellbar sind stehende Fotos, bewegte Bilder, Filme usw. Liegen die Formate der Darstellungen digital vor, dann können sie durch ein Programm auf digitalem Wege so verzerrt werden, dass sie nach Reflektion durch den Spiegel 3 und Auftreffen auf die Projektionsfläche 2 wieder entzerrt erscheinen. Die dargestellten Motive können 360°-Ansichten oder begrenzte und nebeneinandergestellte Ansichten (sog. Splitscreen-Darstellung) sein.

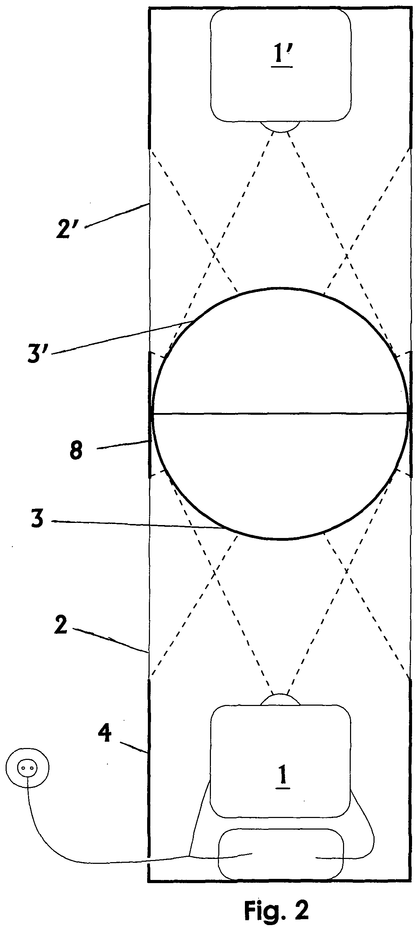

In Fig. 2 sind zwei einander gegenüberliegende Bildschirme gezeigt. Wiederum in einer Säule 4 angeordnet erhöht sich der Anteil der Säulenfläche, der durch eine Projektionsfläche 2 oder 2' eingenommen wird. Dazu liegt ein entlang der optischen Achse entgegengesetzt angeordneter Spiegel 3' gegenüber einem zweiten Projektionsmittel 1', welches ebenso auf der optischen Achse, aber entgegengesetzt ausgerichtet, liegt. Die beiden Projektionsflächen 2 und 2' sind durch ein umläufig gelegenes Band 8 voneinander beabstandet.

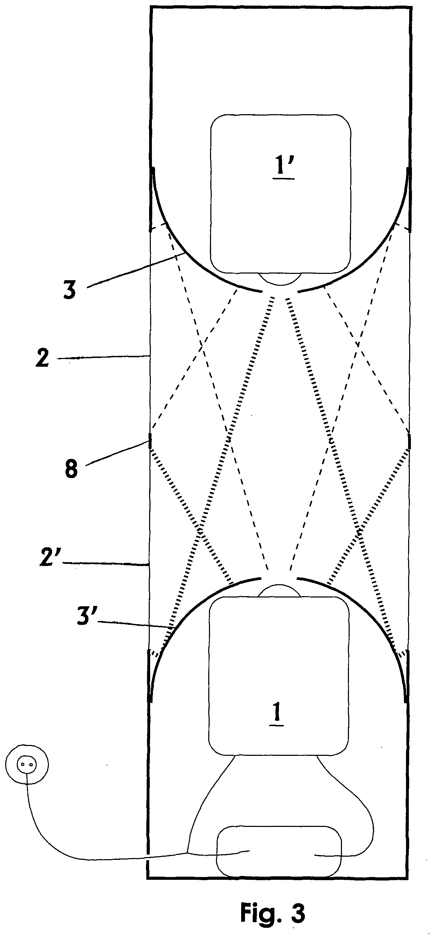

Gemäß Fig. 3 sind zwei Bildschirme so angeordnet, dass die optischen Relationen der Bestandteile denen der Ausführungsform in Fig. 2 entsprechen, die räumlichen Abstände aber andere sind. Es wird der erwähnte Umstand ausgenutzt, dass die Zenitbereiche der Spiegel 3 und 3' optisch ungenutzt sind und als Löcher oder lichtdurchlässig ausgebildet sein können. Auch in Fig. 3 sind die Bildschirme durch ein Band 8 beabstandet. Allerdings kann die Abstandshöhe bis auf null reduziert werden, so dass der Betrachter den Eindruck hat, vor einem einzigen Bildschirm zu stehen. Dazu wird der zu projizierende Inhalt mittels eines Computers an beide Projektionsmittel 1 und 1' aufgeteilt abgegeben.

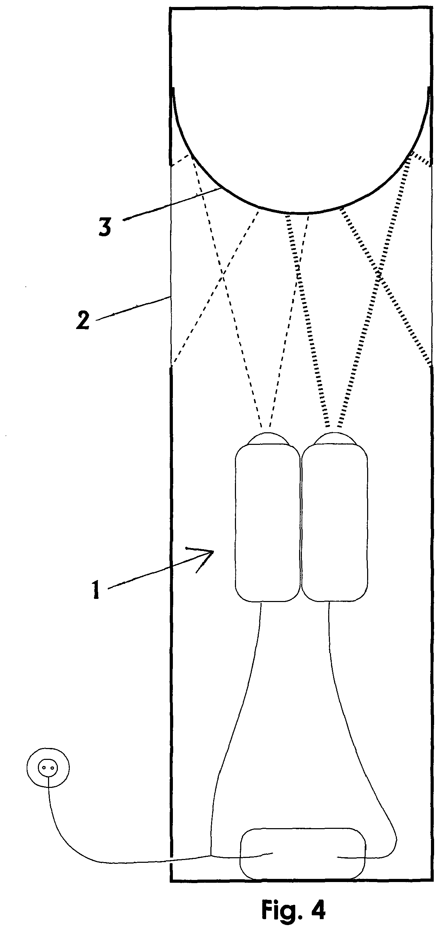

In Fig. 4 ist ein in einer Säule 4 angeordneter Bildschirm zu sehen, dessen Projektionsmittel 1 aus zwei Beamern besteht. Sie werden entlang der optischen Achse so ausgerichtet, dass sie jeweils etwas mehr als eine halbe Seite des ersten Spiegels 3 beleuchten. Dadurch entsteht ein Bereich auf dem ersten Spiegel 3 und der Projektionsfläche 2, in welchem sich die Darstellungen beider Beamer überlappen. In diesem Bereich zeigen beide Beamer gleiche Darstellungen mit verminderter Intensität (Soft-edge-Technologie), um in der Gesamtdarstellung Brüche, Unschärfen oder Helligkeitsunterschiede zu minimieren.

Ein Vorteil dieser Ausführungsform liegt darin, dass der Bildschirm eine höhere Helligkeit und einer höhere Bildauflösung zeigt, als ein Bildschirm mit nur einem Beamer.

In einer besonders vorteilhaften Ausführungsform ist der Spiegel 3 im Zenit offen ausgebildet und verfügt über ein Blendenelement 9 nach Fig. 14. Bei Verwendung von zwei Beamern kommt es zum überraschenden konstruktiven Vorteil, dass Kabel zur Ansteuerung von Lautsprecherboxen zwischen den Beamern, durch das Blendenelement 9 und durch die Öffnung im ersten Spiegel 3 bis zu den Boxen gelegt werden können. Dadurch ist eine multimediale, der natürlichen Betrachtung und Hörgewohnheit am nächsten kommende Darstellung auf dem Bildschirm möglich, ohne dass die notwendigen Kabel im optischen Weg von dem Projektionsmittel 1 bis zum Betrachter liegen.

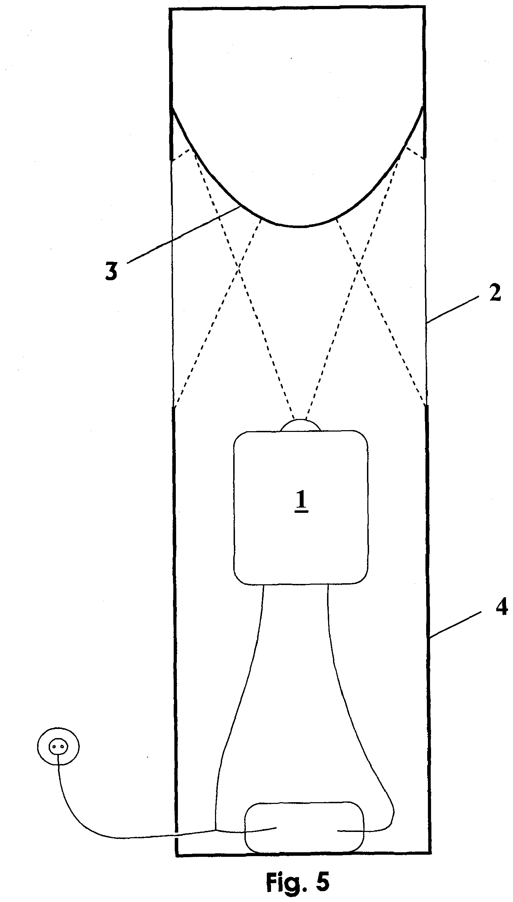

Gemäß Fig. 5 kann der erste Spiegel 3 auch als Parabolspiegel ausgeführt sein. Die Darstellung wird dadurch zum einen schärfer, zum anderen ist eine größere Bildschirmhöhe beleuchtbar. Sphärische Spiegel haben den Vorteil, kostengünstiger als die parabolischen zu sein.

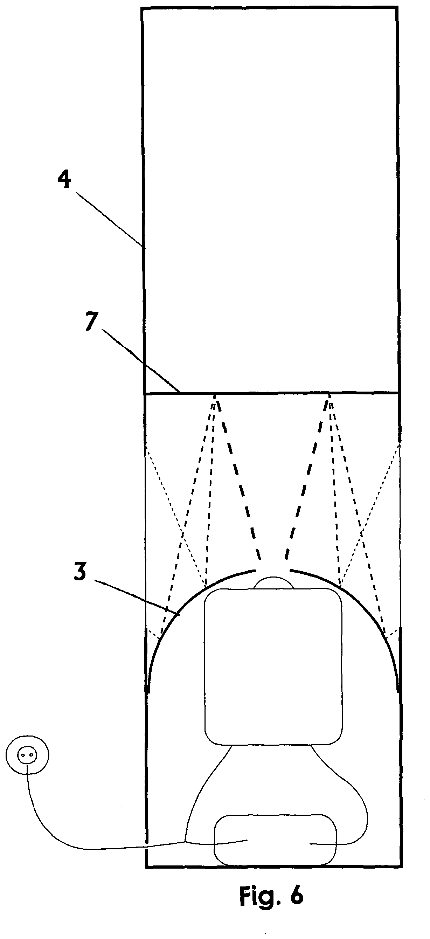

In Fig. 6, die die Ausführungsform der Erfindung des Anspruchs 1 zeigt, liegt optisch zwischen dem Projektionsmittel 1 und dem ersten Spiegel 3 ein planer zweiter Spiegel 7. Dadurch ist der erste Spiegel 3 relativ zu den Anordnungen der zuvor beschriebenen Ausführungsformen umgekehrt auszurichten. Entsprechend wird die Darstellung der Projektion gespiegelt und ist gegebenenfalls mittels eines Computerprogramms digital umzurechnen. Der Bildschirm ist in dieser Ausführungsform kompakter und lässt beispielsweise mehr Freiraum in der Säule 4.

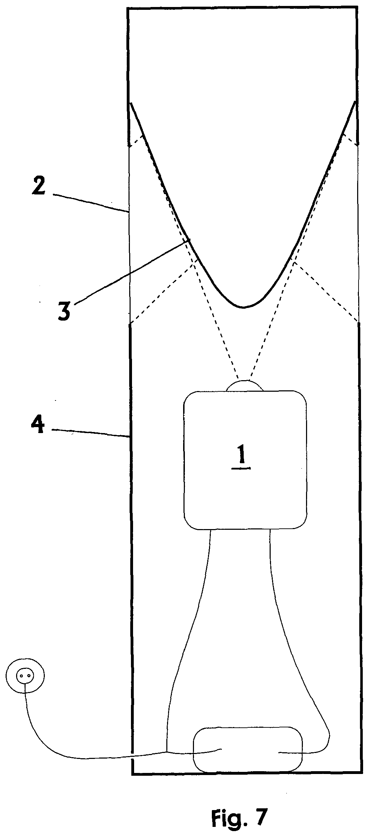

Gemäß Fig. 7 kann der erste Spiegel 3 auch als hyperbolischer Spiegel ausgeführt sein.

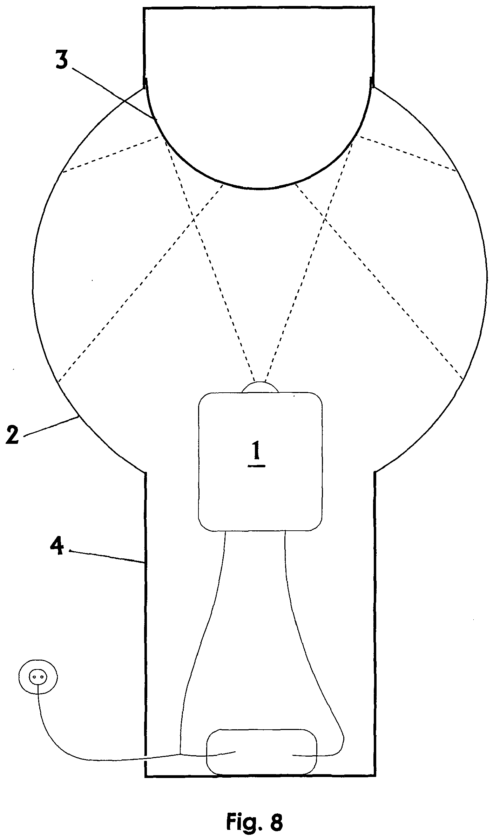

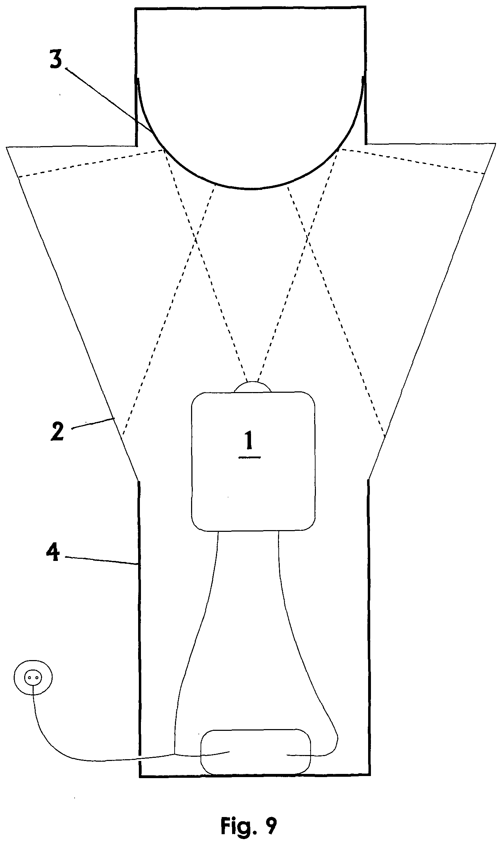

In den Fig. 8 und 9 sind Bildschirme in Säulen 4 dargestellt, die Rotationskörper abweichend von der Zylinderform bilden. Fig. 8 zeigt einen im wesentlichen kugelförmigen Bildschirm, Fig. 9 einen im wesentlichen kegelförmigen. Die Entzerrung der auf den Bildschirm projizierten Information erfolgt rechnerisch.

## Patentansprüche

1. Säule mit einem Bildschirm, welcher einen Wiedergabewinkel von 360° aufweist, umfassend einen im Strahlengang eines Projektionsmittels (1) und im Bereich der Zentralachse einer um 360° geschlossenen, von der Säule (4) gebildeten Projektionsfläche (2) angeordneten ersten Spiegel (3), dessen Spiegelfläche die Fläche einer um die im Strahlengang des Projektionsmittels (1) liegenden Achse rotierenden Kurve ist, wobei die Kurve und der Abstand des Projektionsmittels (1) zum ersten Spiegel (3) derart gewählt sind, dass der Bildschirm bei Projektion des ersten Spiegels (3) im Winkel von 360° beleuchtet wird, wobei die derart geschlossene Projektionsfläche (2) einen Innenraum, in welchem das Projektionsmittel (1) und der erste Spiegel (3) angeordnet sind, und einen Außenraum definiert, wobei ferner die Projektionsfläche (2) als Rückprojektionsfolie ausgebildet ist, wodurch der Bildschirm vom Außenraum aus betrachtbar ist, und wobei das Projektionsmittel (1) im Innenraum des ersten Spiegels (3) angeordnet ist und das Licht von dem Projektionsmittel (1) durch eine Öffnung im ersten Spiegel (3) ausgesendet wird, **dadurch gekennzeichnet, dass** das durch die Öffnung im ersten Spiegel (3) ausgesendete Licht auf einen zweiten planen Spiegel (7) gesendet wird und dann über den ersten Spiegel (3) auf die Projektionsfläche (2) reflektiert wird.

2. Säule nach Anspruch 1, **dadurch gekennzeichnet, dass** die Fläche des ersten Spiegels (3) im wesentlichen parabolisch, hyperbolisch oder elliptisch oder ein Kugelspiegel ist.

3. Säule nach Anspruch 1 oder 2, **dadurch gekennzeichnet, dass** das Projektionsmittel (1) mindestens ein Beamer ist.

4. Säule nach einem der Ansprüche 1 bis 3, **dadurch gekennzeichnet, dass** die Säule (4) und die Projektionsfläche (2) im wesentlichen zylindrisch oder ellipsoid ausgebildet ist.

5. Säule nach einem der Ansprüche 1 bis 4, **dadurch gekennzeichnet, dass** auf einem Computer (5) ein Programm zur Bearbeitung der Bilddaten installiert ist, durch welches die durch die Spiegelkrümmung des ersten Spiegels (3) verzerrte Darstellung entzerrbar ist.

6. Säule nach einem der Ansprüche 1 bis 5, **dadurch gekennzeichnet, dass** die Projektionsfläche (2) im wesentlichen kugelförmig oder kegelförmig ist.

7. Säule nach einem der Ansprüche 1 bis 6, **dadurch gekennzeichnet, dass** zwischen Projektionsmittel (1) und ersten Spiegel (3) im Strahlengang ein Blendenelement (9) angeordnet ist.

8. Säule nach einem der Ansprüche 1 oder 7, **dadurch gekennzeichnet, dass** sie einen zweiten Bildschirm nach einem der Ansprüche 1 bis 6 aufweist, wobei das zugeordnete Projektionsmittel (1') und der zugeordnete erste Spiegel (3') entgegengesetzt zu jenen des ersten Bildschirmes angeordnet sind.

## Claims

1. Column having a screen which has a display angle of 360°, comprising a first mirror (3) arranged in the beam path of a projection means (1) and in the region of the central axis of a projection surface (2) which is closed about 360° and formed by the column (4), the mirror surface of which mirror is the surface of a curve rotating about the axis in the beam path of the projection means (1), the curve and the distance of the projection means (1) from the first mirror (3) being selected such that the screen is illuminated at an angle of 360° upon projection of the first mirror (3), the projection surface (2) thus closed defining an inner space in which the projection means (1) and the first mirror (3) are arranged and an outer space, the projection surface (2) also being designed as a rear projection film, as a result of which the screen can be viewed from the outer space, and the projection means (1) being arranged in the inner space of the first mirror (3) and the light being emitted from the projection means (1) through an opening in the first mirror (3), **characterised in that** the light emitted through the opening in the first mirror (3) is transmitted onto a second plane mirror (7) and then reflected onto the projection surface (2) via the first mirror (3).

2. Column according to claim 1, **characterised in that** the surface of the first mirror (3) is substantially parabolic, hyperbolic or elliptical or a spherical mirror.

3. Column according to either claim 1 or claim 2, **characterised in that** the projection means (1) is at least one projector.

4. Column according to any of claims 1 to 3, **characterised in that** the column (4) and the projection surface (2) are substantially cylindrical or ellipsoidal.

5. Column according to any of claims 1 to 4, **characterised in that** a program for processing the image data is installed on a computer (5), by means of which program the display distorted by the curvature of the first mirror (3) can be rectified.

6. Column according to any of claims 1 to 5, **characterised in that** the projection surface (2) is substantially spherical or conical.

7. Column according to any of claims 1 to 6, **characterised in that** a diaphragm element (9) is arranged in the beam path between the projection means (1) and the first mirror (3).

8. Column according to either claim 1 or claim 7, **characterised in that** it has a second screen according to any of claims 1 to 6, the associated projection means (1') and the associated first mirror (3') being arranged opposite those of the first screen.

## Revendications

1. Colonne munie d'un écran ayant un angle de reproduction de 360°, comprenant un premier miroir (3) placé dans le trajet optique d'un moyen de projection (1) et dans la zone de l'axe central d'une surface de projection (2) fermée sur 360° et formée par la colonne (4), dont la surface de miroir est la surface d'une courbe tournant autour de l'axe situé sur le trajet optique du moyen de projection (1), dans laquelle la courbe et la distance du moyen de projection (1) par rapport au premier miroir (3) sont choisies de manière à ce que l'écran soit éclairé sous un angle de 360° lors de la projection du premier miroir (3), dans lequel la surface de projection (2) ainsi fermée définit un espace intérieur dans lequel sont disposés le moyen de projection (1) et le premier miroir (3), et un espace extérieur, dans lequel la surface de projection (2) est en outre réalisée sous la forme d'une feuille de rétroprojection, cela permettant d'observer l'écran de l'extérieur, et dans lequel le moyen de projection (1) est disposé dans l'espace intérieur du premier miroir (3) et la lumière provenant du moyen de projection (1) est émise à travers une ouverture ménagée dans le premier miroir (3), **caractérisée en ce que** la lumière émise à travers l'ouverture du premier miroir (3) est envoyée vers un second miroir (7) plan puis réfléchie par le premier miroir (3) vers la surface de projection (2).

2. Colonne selon la revendication 1, **caractérisée en ce que** la surface du premier miroir (3) est sensiblement parabolique, hyperbolique ou elliptique ou un miroir sphérique.

3. Colonne selon la revendication 1 ou 2, **caractérisée en ce que** le moyen de projection (1) est au moins un vidéoprojecteur.

4. Colonne selon l'une des revendications 1 à 3, **caractérisée en ce que** la colonne (4) et la surface de projection (2) sont sensiblement cylindriques ou ellipsoïdales.

5. Colonne selon l'une des revendications 1 à 4, **caractérisée en ce qu'**un programme de traitement des données d'image installé sur un ordinateur (5) permet de rectifier la représentation déformée par la courbure du premier miroir (3).

6. Colonne selon l'une des revendications 1 à 5, **caractérisée en ce que** la surface de projection (2) est sensiblement sphérique ou conique.

7. Colonne selon l'une des revendications 1 à 6, **caractérisée en ce qu'**un élément de diaphragme (9) est disposé sur le trajet optique entre le moyen de projection (1) et le premier miroir (3).

8. Colonne selon l'une des revendications 1 ou 7, **caractérisée en ce qu'**elle comporte un second écran selon l'une des revendications 1 à 6, dans lequel le moyen de projection associé (1') et le premier miroir associé (3') sont disposés à l'opposé de ceux du premier écran.
